# EUROPEAN PATENT SPECIFICATION

(11) **EP 0 506 195 B1**
(45) Date of publication and mention of the grant of the patent: **07.12.1994**
(21) Application number: 92200836.2
(22) Date of filing: 23.03.1992
(51) Int. Cl.: C09J 7/02, E04D 5/12

(54) **Self-adhesive water proofing product**
Selbstklebendes Dichtungsmaterial
Produit d'étanchéité autoadhésif

(30) Priority: 25.03.1991 US 674268
(43) Date of publication of application: 30.09.1992
(73) Proprietor: SHELL INTERNATIONALE RESEARCH MAATSCHAPPIJ B.V., 2596 HR Den Haag (NL)
(72) Inventor: Gelles, Richard, Houston, Texas 77042 (US)

(56) References cited:
- EP-A- 0 299 499
- EP-A- 0 378 372
- FR-A- 2 440 967

## Description

The present invention relates to a self-adhesive water proofing product which contains a waterproofing layer as well as an adhesive layer comprising a bituminous component and a functionalized block copolymer component.

European Patent Application 0,238,149 discloses a bituminous composition which is useful as a self-adhesive compound. The composition comprises a bituminous component, a lithium salt of a C₁₀-C₄₀ fatty acid or hydroxy fatty acid, an elastomer and an amorphous silica filler. This bituminous composition is described as being useful as a preformed self-adhesive layer on a protective sheet, such as roofing felt.

Prior systems, such as disclosed in European Patent Application 37,136, utilized compositions containing harder asphalts and thus were not sufficiently tacky for use in a self-adhesive product. When tackier asphalts were used, the formulation would generally exude oil which would often cause the product to lose adhesion to the substrate to which it was adhered. This phenomenon can be demonstrated in a laboratory flow resistance test at elevated temperatures. European Application 0,238,149 added the silica filler to the formulation to prevent this phenomenon from taking place. However, this composition including silica has a disadvantage in that the use of too much silica can cause a loss of tack of the composition, thereby negating its usefulness as a preformed self-adhesive layer.

European Patent No. 0,216,679 discloses coverings comprising bitumen, polymer and a composition of heavy and light hydrocarbon solvents. The polymer may be a triblock copolymer of styrene and butadiene or isoprene, which optionally has been modified by carboxylic groups or which has been hydrogenated. The different components are blended to form one continuous phase, after which the flexible covering can be brought onto the substrate. The waterproofing properties of said covering, however, as well as its self-adhesiveness can be improved.

European Patent Application No. 0,299,499 discloses a composition comprising a specifically hydrogenated block copolymer product and at least one thermoplastic substance selected from tackifier resins, thermoplastic resins and bituminous materials. Said hydrogenated block copolymer product may be a block copolymer, having at least one polymer block composed mainly of a vinyl aromatic compound and at least one polymer block composed mainly of a conjugated diene, whereby said block copolymer has a vinyl aromatic content prior to hydrogenation from 5 to 95% by weight and a content of vinyl linkages [V] prior to hydrogenation, which vinyl linkages originated from the conjugated diene, of 10% to 80%. The hydrogenation ratio [A] of the total of aliphatic double bonds originating from the conjugated diene is between 5% and 50% and [B]/[V]^{1/2} may vary from 3 to 20, wherein [B] is the hydrogenation ratio of the vinyl linkage portions originating from the conjugated diene. Said hydrogenated block copolymer product may also be the above discussed block copolymer modified with an α,β-unsaturated carboxylic acid or a derivative thereof, or a mixture of said block copolymer and its acid modified variant.

Again, a one-phase bituminous composition is disclosed, of which the initial tackiness and heat treatment performance were improved by using a block copolymer which had been specifically hydrogenated as discussed above. No special attention, however, is paid to waterproofing properties, or, in more general terms, to protection of the adhesive bituminous material against all kinds of environmental circumstances.

Moreover, from said European patent application it became clear that a bituminous composition comprising a substantially completely hydrogenated block copolymer is inferior in low temperature properties and would have the problem of worse flexibility at lower temperatures. Surprisingly, according to the present invention it was found that in particular modified block copolymers being substantially free of aliphatic unsaturation show excellent properties.

From the above, it is clear that it would be an advantage to provide a water proofing product which utilizes a bituminous self-adhesive layer which does not require the use of large amounts of silica to prevent oil from exuding from the bituminous composition (small amounts of silica may be advantageous herein).

Furthermore, it would be advantageous to provide a product which combines a bituminous self-adhesive layer with a separate, water proofing layer attached thereto in order to optimize the combination of adhesion properties and water proofing properties. The present invention provides such a product which meets all these requirements.

The present invention relates to a self-adhesive water proofing product which comprises a water proofing layer and an adhesive layer comprising a bituminous component and a block copolymer comprising at least one polymer block derived from a vinyl aromatic hydrocarbon and at least one polymer block derived from a conjugated diene wherein the copolymer is functionalized by grafting at least one carboxylic acid or anhydride group or a derivative thereof onto a conjugated diene polymer block. It is preferred that the adhesive layer comprise a mixture of bituminous component and polymer which comprises from about 85% to about 99.5% of the bituminous component and from about 0.5% to about 15% of the functionalized block copolymer.

The self-adhesive water proofing products of the present invention include polymer modified asphalt roll roofing products, shingles, building foundation liners, storage tank liners, thermoplastic and thermoset rubber sheet roofing (often called "single ply roofing"), roofing felt, etc. The inventive systems basically require a protective membrane which contains a layer of a protective water proofing material and an adhesive layer described below. The protective material includes rubber sheets, metal foils, such as aluminium foils, heat or sound insulation panels, roofing felt, and polymer modified asphalt. Polymers included in the latter are block copolymers, polyolefins like atactic polypropylene, polyethylene, elastomers like EPDM and SBR and the like. For roll roofing membranes, one example of the protective layer is a reinforcing mat saturated and coated with polymer modified asphalt or other bitumen and then topped with granules. It is preferred that the protective layer is a reinforcing fibrous mat saturated and coated with block copolymer modified asphalt and topped with granules.

Another water proofing product which can be made according to the present invention is a self-adhesive building foundation liner which comprises a water proofing protective layer comprised of a polymer modified bitumen sheet which may include a reinforcing fibrous mat and also may include a plastic coating. Another product which can be made according to the present invention is a self-adhesive storage tank liner which comprises a water proofing layer of a polymer modified bitumen sheet which may include a reinforcing fibrous mat. Also encompassed is a rubber sheet roofing product which comprises a water proofing layer utilizing a thermoplastic or thermoset neat or compounded rubber sheet. Still another product is a self adhesive roofing felt product which comprises a waterproofing layer of a reinforcing fibrous mat, saturated and coated with bitumen. All of these products include an adhesive layer comprising a mixture of a bituminous component and a block copolymer comprised of at least one polymer block derived from a vinyl aromatic hydrocarbon and at least one polymer block derived from a conjugated diene wherein the block copolymer contains at least one functional group as described below.

The bituminous component in the bituminous-block copolymer compositions according to the present invention may be a naturally occurring bitumen or derived from a mineral oil. Also, petroleum derivatives obtained by a cracking process and coal tar can be used as the bituminous component as well as blends of various bituminous materials.

Examples of suitable components include distillation or "straight-run bitumens", precipitation bitumens, e.g. propane bitumens, blown bitumens and mixtures thereof. Other suitable bituminous components include mixtures of one or more of these bitumens with extenders such as petroleum extracts, e.g. aromatic extracts, distillates or residues, or with oils.

The adhesive layer in the product of the present invention comprises a mixture of bituminous component and polymer comprising generally from 85% to 99.5% of the bituminous component and from 0.5% to 15% of the functionalized block copolymer. If less than 0.5% of the functionalized block copolymer is used, then the adhesive layer in the product does not exhibit improved adhesion over prior systems and if more than 15% of the block polymer is used, then the product becomes too costly. Preferably, from about 1% to about 12% of the functionalized block copolymer is used because this range ensures that the improvement over prior systems is obtained while maintaining reasonable cost.

The functionalized block copolymers utilized should contain from at least 0.2% of the functional groups because this ensures the desired improvement is obtained. Preferably, from 0.5% to 3% of the functional groups should be present in the polymer.

The base polymers of the present invention are block copolymers of conjugated dienes and vinyl aromatic hydrocarbons. Such block copolymers may be multiblock copolymers of varying structures containing various ratios of conjugated dienes to vinyl aromatic hydrocarbons including those containing up to 50% by weight of vinyl aromatic hydrocarbon. Thus, multiblock copolymers may be utilized which are linear or radial, symmetric or asymmetric, and which have structures represented by the formulae, A-B, A-B-A, A-B-A-B, B-A, B-A-B, B-A-B-A, (A-B)_{0,1,2,...}B-A and the like wherein A is a polymer block of a vinyl aromatic hydrocarbon and B is a polymer block of a conjugated diene. It is preferred that the conjugated diene block B has been substantially completely hydrogenated, or, in other words, the residual unsaturation preferably is less than 5% and most preferably as close to 0% as possible, said percentages being calculated based on the original unsaturation content prior to hydrogenation.

The block copolymers may be produced by any well known block polymerization or copolymerization procedures including the well-known sequential addition of monomer techniques, incremental addition of monomer technique or coupling technique as illustrated in, for example, U.S. Patents Nos. 3,251,905, 3,390,207, 3,598,887 and 4,219,627. It will be appreciated that tapered copolymer blocks can be incorporated in the multiblock copolymer by copolymerizing a mixture of conjugated diene and vinyl aromatic hydrocarbon monomers utilizing the difference in their copolymerization reactivity rates. Various patents describe the appropriation of multiblock copolymers containing tapered copolymer blocks including U.S. Patents Nos. 3,251,905, 3,265,765, 3,639,521 and 4,208,356.

Conjugated dienes which may be utilized to prepare the polymers and copolymers include those having from 4 to 8 carbon atoms and also include 1,3-butadiene, 2-methyl-1,3-butadiene(isoprene), 2,3-dimethyl-1, 3-butadiene, 1,3-pentadiene, 1,3-hexadiene and the like. Mixtures of such conjugated dienes may also be used. The preferred conjugated dienes are 1,3-butadiene and isoprene.

Vinyl aromatic hydrocarbons which may be utilized to prepare copolymers include styrene, o-methylstyrene, p-methylstyrene, p-tert-butylstyrene, 1,3-dimethylstyrene, alpha-methylstyrene, vinylnapthalene, vinylanthracene and the like. The preferred vinyl aromatic hydrocarbon is styrene.

The present invention works with both unhydrogenated and hydrogenated block copolymers. Hydrogenated block copolymers, however, are preferred. While block copolymers have a number of outstanding technical advantages, one of their principle limitations lies in their sensitivity to oxidation. This can be minimized by hydrogenating the block copolymers, particularly in the diene blocks. The hydrogenation of these polymers and copolymers may be carried out by a variety of well established processes including hydrogenation in the presence of such catalysts as Raney Nickel, noble metals such as platinum, palladium and the like and soluble transition metal catalysts. Titanium biscyclopentadienyl catalysts may also be used. Suitable hydrogenation processes which can be used are ones wherein the diene-containing polymer or copolymer is dissolved in an inert hydrocarbon diluent such as cyclohexane and hydrogenated by reaction with hydrogen in the presence of a soluble hydrogenation catalyst. Such processes are disclosed in U.S. Patents Nos. 3,113,986, 4,226,952 and Reissue 27,145. Preferably, the polymers are hydrogenated in such a manner as to produce hydrogenated polymers having a residual unsaturation content in the polydiene block of less than 5% and most preferably as close to zero percent as possible, said percentages being calculated based on their original unsaturation content prior to hydrogenation.

In general, any materials having the ability to react with the base polymer are operable for purposes of the present invention to make the functionalized block copolymers used herein. One method to incorporate the functional groups into the base polymer is to graft monomers capable of reacting with the base polymer in solution or in the melt by free radical mechanisms. There are many other possible ways to incorporate functional groups into the block copolymer. Examples include metallation as described in U.S. 4,868,245 and sulfonation as described in U.S. 4,086,171. The method chosen to incorporate the functional groups is not critical to the invention.

The functionalized block copolymers of the present invention are hydrogenated and unhydrogenated block copolymers as described above which have been functionalized, i.e. reacted with various functional group-containing molecules. The functional group containing molecules which may be reacted with such block copolymers to produce a functionalized block copolymer useful in the present invention include acid or anhydride groups or derivatives thereof. Functionalized polymers containing carboxyl groups reacted onto the vinyl aromatic hydrocarbon block are described in U.S. Patent 4,868,245. The preferred monomers for functionalizing the polymers of the present invention are those which can be grafted onto the diene block of the polymer in free radical initiated reactions. Such preferred monomers include acids or anhydrides or derivatives thereof such as carboxylic acid groups and their salts, anhydrides, esters, imide groups, amide groups, acid chlorides and the like. Such monomers and functionalized polymers incorporating them are described in U.S. Patent 4,578,429. The preferred modifying monomers are unsaturated mono- and poly-carboxylic-containing acids and anhydrides and other derivatives thereof. Examples of such monomers include maleic acid, maleic anhydride, fumaric acid and the other materials mentioned in the above-referenced patent.

Unfunctionalized block copolymers have been used in similar applications before. The products of the present invention which utilize functionalized block copolymers are much better than such prior products because products which utilize the functionalized block copolymers exhibit higher bond strengths to substrates. Also, these functionalized block copolymers are more compatible with some bitumens which contain more polar components. Another advantage is that once it is adhered to a substrate the bitminous composition containing such functionalized block copolymers does not exude oil and debond from the substrate as do most of the asphalt polymer systems which are formulated to be soft and tacky. Thus, the problem of exuding of oil can be avoided without the use of large amounts of silica as described in European Patent Application 0,238,149.

The invention is further illustrated by the following examples without restricting the scope of the invention to these embodiments.

### COMPARATIVE EXAMPLES A-I AND EXAMPLES 1-6

The examples and comparative examples clearly demonstrate that fluxes and asphalts modified with maleic anhydride functionalized block copolymers of vinyl aromatic hydrocarbons and conjugated dienes exhibit improved adhesion to polar substrates compared to unmodified systems and systems modified with such polymers which do not contain functionality. Asphalts and polymer modified asphalts are often used in applications in which adhesion to polar materials is required. An example is "peel 'n stick" (aggressively tacky) membranes. In the current work, KRATON FG-1901X Rubber* (a maleic anhydride functionalized low molecular weight hydrogenated styrene-butadiene-styrene SEBS block copolymer grafted with approximately 1.7% maleic anhydride) modified fluxes and asphalts were tested as to "peel 'n stick" performance.
* KRATON is a trade mark

Polymer modified asphalts and fluxes were prepared at 180 °C with high shear mixing. They were then doctor bladed to a 1.25 mm thick film on a mylar backing. The film was allowed to cool to room temperature. It was then adhered to the test substrate at room temperature with a 11.8 kg (26 pound) roller. 180 degree peel tests were run on the specimens at room temperature with an Instron using a jaw separation rate of 5 cm/min. Results are given in Table 1.

Results for examples 1 (compared to comparative examples A-E) and 4 (compared to comparative examples F and G) show that fluxes and asphalts modified with FG-1901X exhibit significantly higher peel strengths to steel than unmodified systems and systems modified with rubbers which do not contain functional groups. Results of examples 2 and 3 show that FG-1901X still works when cut back with unmodified rubbers. When comparing the results of examples 5 and 6 with those of respectively comparative examples H and I it is shown that FG-1901X also provides improved adhesion to aluminium and portland cement concrete as compared to an unmodified rubber.

**Table 1**

| 180 Degree Peel Strengths | | | | |
|---|---|---|---|---|
| Sample | Flux or Asphalt¹ | Polymer | Substrate | Peel Strength (pli)² |
| A | Flux | None | Steel | 0.02 ± 0.03 |
| B | Flux | 12% D1101⁴ | Steel | 0.4 ± 0.3 |
| C | Flux | 12% D1184⁵ | Steel | 0.3 ± 0.3 |
| D | Flux | 6% D1184 + 6% D1118⁶ | Steel | 0.7 ± 0.3 |
| E | Flux | 12% Degraded G1652³ | Steel | 0.7 ± 0.3 |
| 1 | Flux | 12% FG1901X⁷ | Steel | 2.8 ± 0.9 |
| 2 | Flux | 6% FG1901X + 6% D1101 | Steel | 3.9 ± 3.6 |
| 3 | Flux | 6% FG1901X + 6% D1184 | Steel | 3.4 ± 0.9 |
| F | WR AC-10 | None | Steel | 1.0 ± 0.4 |
| G | WR AC-10 | 12% Degraded G1652 | Steel | 1.7 ± 0.9 |
| 4 | WR AC-10 | 12% FG1901X | Steel | 10.6 ± 2.4 |
| H | Flux | 12% G1652 | Aluminum | 0.8 ± 0.3 |
| 5 | Flux | 12% FG1901X | Aluminum | 2.3 ± 0.3 |
| I | Flux | 12% G1652 | Portland Cement | 2.1 ± 1.5 |
| 6 | Flux | 12% FG1901X | Portland Cement | 5.8 ± 2.7 |

| | | | | |
|---|---|---|---|---|
| ¹ Deer Park flux and Woodriver AC-10 used. | | | | |
| ² Average of 5 values ± 3 standard deviations. Neat asphalts failed cohesively. Modifieds failed adhesively. | | | | |
| ³ KRATON G1652 polymer (a linear SEBS polymer) degraded to the same level as FG1901X. | | | | |
| ⁴ KRATON D1101 polymer (a linear SBS polymer) | | | | |
| ⁵ KRATON D1184 polymer (a branched S-B polymer) | | | | |
| ⁶ KRATON D1118 polymer (an S-B diblock polymer) | | | | |
| ⁷ KRATON FG1901X (described above) | | | | |

## Claims

1. A self-adhesive water proofing product which comprises:
(a) a water proofing layer, and
(b) an adhesive layer comprising a mixture of a bituminous component and a block copolymer comprising at least one polymer block derived from a vinyl aromatic hydrocarbon and at least one polymer block derived from a conjugated diene wherein the block copolymer contains at least one functional group, wherein the polymer block derived from a conjugated diene has been hydrogenated to have a residual unsaturation of less than 5% based on the original unsaturation content prior to hydrogenation.

2. The product of claim 1 wherein the conjugated diene polymer block is substantially free of unsaturation.

3. The product of claim 1 or 2 wherein the functional group is an acid or anhydride group or a derivative thereof.

4. The product of any of the claims 1 to 3 wherein the adhesive layer comprises from 0.5% to 15% of the functionalized block copolymer.

5. The product of claim 4 wherein the adhesive layer comprises from 1% to 12% of the functionalized block copolymer.

6. The self-adhesive product of claim 1, wherein the functionalized block copolymer utilized, contains from at least 0.2% of the functional groups and preferably from 0.5% to 3% of functional groups.

7. The self-adhesive product of claim 1 wherein the water proofing layer is comprised of a reinforcing fibrous mat saturated and coated with bituminous compositions topped with a granular surfacing material whereby the product is formed into shingles.

8. The self-adhesive product of claim 1 wherein the water proofing layer is comprised of a polymer modified bitumen sheet.

9. The product of claim 8 wherein the sheet includes a reinforcing fibrous mat and a plastic coating.

10. The product of claim 1 wherein the water proofing layer is comprised of polymeric rubber sheet.

11. The self-adhesive product of claim 1 wherein the water proofing layer is comprised of a reinforcing mat saturated and coated with polymer-modified bitumen.

12. The product of claim 11 wherein the reinforcing mat is a fibrous mat.

## Patentansprüche

1. Ein selbst-klebendes Dichtungsmaterial, welches umfaßt:
(a) eine Imprägnierschicht, und
(b) eine Klebschicht umfassend eine Mischung aus einer bituminösen Komponente und einem Blockcopolymer, letzteres umfassend mindestens einen Polymerblock, der von einem vinylaromatischen Kohlenwasserstoff abgeleitet ist, und mindestens einen Polymerblock, der von einem konjugierten Dien abgeleitet ist, wobei das Blockcopolymer mindestens eine funktionelle Gruppe enthält, und wobei der Polymerblock, der von einem konjugierten Dien abgeleitet ist, hydriert worden ist und eine restliche Nicht-Sättigung von weniger als 5%, bezogen auf die ursprüngliche Nicht-Sättigung vor dem Hydrieren, aufweist.

2. Das Produkt gemäß Anspruch 1, in welchem der konjugierte Dienpolymerblock im wesentlichen frei ist von Nicht-Sättigung.

3. Das Produkt gemäß Anspruch 1 oder 2, in welchem die funktionelle Gruppe eine Säure- oder Anhydridgruppe oder ein Derivat davon ist.

4. Das Produkt gemäß einem der Ansprüche 1 bis 3, in welchem die Klebschicht 0,5 bis 15% des funktionalisierten Blockcopolymers enthält.

5. Das Produkt gemäß Anspruch 4, in welchem die Klebeschicht 1 bis 12% des funktionalisierten Blockcopolymers umfaßt.

6. Das selbst-klebende Dichtungsmaterial gemäß Anspruch 1 , in welchem das eingesetzte funktionalisierte Blockcopolymer mindestens 0,2% an funktionellen Gruppen und vorzugsweise 0,5 bis 3% an funktionellen Gruppen enthält.

7. Das selbst-klebende Dichtungsmaterial gemäß Anspruch 1, in welchem die Imprägnierschicht aus einer faserartigen Verstärkungsmatte besteht, die mit bituminösen Zusammensetzungen gesättigt und beschichtet ist, und die mit einem granulatartigen Oberflächenmaterial abgestreut ist, wobei das Produkt zu Schindeln geformt ist.

8. Das selbst-klebende Dichtungsmaterial gemäß Anspruch 1, in welchem die Imprägnierschicht aus einer Schicht eines polymermodifizierten Bitumens besteht.

9. Das Produkt gemäß Anspruch 8, in welchem die Schicht eine faserartige Verstärkungsmatte und eine Kunststoffbeschichtung umfaßt.

10. Das Dichtungsmaterial gemäß Anspruch 1, in welchem die Imprägnierschicht aus einer Schicht eines Polymerkautschuk besteht.

11. Das selbst-klebende Dichtungsmaterial gemäß Anspruch 1, in welchem die Imprägnierschicht aus einer Verstärkungsmatte besteht, die mit polymer-modifiziertem Bitumen gesättigt und beschichtet ist.

12. Das Produkt gemäß Anspruch 11, in welchem die Verstärkungsmatte eine faserartige Matte ist.

## Revendications

1. Produit auto-adhésif d'imperméabilisation à l'eau, qui comprend :
(a) une couche d'imperméabilisation, et
(b) une couche adhésive comprenant un mélange d'un composant bitumineux et d'un copolymère séquencé comprenant au moins une séquence polymère dérivée d'un hydrocarbure vinylaromatique et au moins une séquence polymère dérivée d'un diène conjugué, dans lequel le copolymère sequencé contient au moins un groupe fonctionnel, dans lequel la séquence polymère dérivée d'un diène conjugué a été hydrogénée de façon à avoir une insaturation résiduelle inférieure à 5% par rapport à la teneur initiale en insaturation avant hydrogénation.

2. Produit selon la revendication 1, dans lequel la séquence polymère diène conjugué est sensiblement exempte d'insaturation.

3. Produit selon la revendication 1 ou 2, dans lequel le groupe fonctionnel est un groupe acide ou anhydride ou un dérivé de celui-ci.

4. Produit selon l'une quelconque des revendications 1 à 3, dans lequel la couche adhésive comprend de 0,5 à 15% de copolymère séquencé fonctionnalisé.

5. Produit selon la revendication 4, dans lequel la couche adhésive comprend de 1 à 12% de copolymère séquencé fonctionnalisé.

6. Produit auto-adhésif selon la revendication 1, dans lequel le copolymère séquencé fonctionnalisé utilisé contient au moins 0,2% de groupes fonctionnels et, de préférence, de 0,5 à 3% de groupes fonctionnels.

7. Produit auto-adhésif selon la revendication 1, dans lequel la couche d'imperméabilisation à l'eau est constituée d'une nappe fibreuse de renforcement saturée et enduite de compositions bitumineuses surmontées d'une matière granulaire de surface de sorte qu'on peut former le produit en shingles.

8. Produit auto-adhésif selon la revendication 1, dans lequel la couche d'imperméabilisation à l'eau est constituée d'une feuille de bitume modifiée par un polymère.

9. Produit selon la revendication 8, dans lequel la feuille comprend une nappe fibreuse de renforcement et un revêtement plastique.

10. Produit selon la revendication 1, dans lequel la couche d'imperméabilisation à l'eau est formée en une feuille de caoutchouc polymère.

11. Produit autoadhésif selon la revendication 1, dont la couche d'imperméabilisation à l'eau est constituée d'une nappe de renforcement saturée et enduite d'un bitume modifié par un polymère.

12. Produit selon la revendication 11, dans lequel la nappe de renforcement est une nappe fibreuse.
